# EUROPEAN PATENT APPLICATION

(11) **EP 4 835 395 A1**
(43) Date of publication of application: **04.11.2026**
(21) Application number: 24938440.5
(22) Date of filing: 05.08.2024
(51) Int. Cl.: G01B 11/02

(54) **DETECTION DEVICE AND BATTERY PRODUCTION SYSTEM**

(30) Priority: 15.05.2024 CN 202410601683
(71) Applicant: Contemporary Amperex Technology Co., Limited, Ningde, Fujian 352100 (CN); Contemporary Amperex Runzhi Software Technology Limited, Ningde, Fujian 352100 (CN)
(72) Inventor: DUAN, Pengfei, Ningde, Fujian 352100 (CN); LIU, Donghong, Ningde, Fujian 352100 (CN); ZHENG, Fengjia, Ningde, Fujian 352100 (CN); ZHAO, Baiquan, Ningde, Fujian 352100 (CN); NI, Dajun, Ningde, Fujian 352100 (CN); HU, Jun, Ningde, Fujian 352100 (CN); FENG, Shiping, Ningde, Fujian 352100 (CN)
(74) Representative: Straus, Alexander
(86) International application number: PCT/CN2024/109897
(87) International publication number: WO 2025/236425

(57) **Abstract**

The present application provides a detection device and a battery production system. The detection device comprises a conveying mechanism, a limiting mechanism and a detection mechanism. The conveying mechanism is used for conveying a composite electrode sheet. The limiting mechanism comprises at least two roller clamping assemblies, each roller clamping assembly comprises a first roller and a second roller, a gap for the composite electrode sheet to pass through is formed between the first roller and the second roller, and the first roller and the second roller are used for working in conjunction to limit the composite electrode sheet. Along the conveyance direction of the composite electrode sheet, a detection area is formed between two adjacent roller clamping assemblies. The detection mechanism is configured to detect a first overhang amount by which a negative electrode sheet located in the detection area exceeds a positive electrode sheet along a width direction of the composite electrode sheet. The detection device is provided with at least two roller clamping assemblies capable of working in conjunction to limit the composite electrode sheet, so that the composite electrode sheet located in the detection area is not prone to bouncing, thereby improving the detection accuracy of the detection mechanism. An electrode assembly manufactured using the composite electrode sheet that has passed the detection exhibits a lower risk of lithium plating, thereby prolonging the service life of the electrode assembly.

## Description

### CROSS-REFERENCE TO RELATED APPLICATIONS

This application claims priority to the Chinese patent application filed on May 15, 2024, entitled "DETECTION DEVICE AND BATTERY PRODUCTION SYSTEM" (application number: 202410601683X), which is incorporated herein by reference in its entirety.

### TECHNICAL FIELD

This application relates to the field of batteries, and in particular, to a detection device and a battery production system.

### BACKGROUND

Batteries are widely used in the new energy field, such as electric vehicles and new energy vehicles. New energy vehicles and electric vehicles have become a new development trend in the automotive industry. The development of battery technologies requires simultaneous consideration of multiple design factors, such as performance parameters including energy density, discharge capacity, and charge-discharge rate. In addition, a battery lifespan needs to be considered. However, lifespans of current batteries are relatively short.

### SUMMARY

The purpose of the embodiments of this application is to provide a detection device and a battery production system, to mitigate the problem of short battery lifespan in the related art.

According to a first aspect, embodiments of this application provide a detection device, configured to detect a composite electrode sheet, where the composite electrode sheet includes a negative electrode sheet, a separator, and a positive electrode sheet, the separator separates the negative electrode sheet and the positive electrode sheet from each other, and the detection device includes a conveying mechanism, a limiting mechanism, and a detection mechanism; the conveying mechanism is configured to convey the composite electrode sheet; the limiting mechanism includes at least two roller clamping assemblies, where the roller clamping assembly includes a first roller and a second roller, a gap for the composite electrode sheet to pass through is formed between the first roller and the second roller, the first roller and the second roller are configured to cooperate to limit the composite electrode sheet, and a detection area is formed between two adjacent roller clamping assemblies along a conveyance direction of the composite electrode sheet; and the detection mechanism is configured to detect a first overhang amount by which the negative electrode sheet located in the detection area extends beyond the positive electrode sheet along a width direction of the composite electrode sheet.

In the above technical solution, the detection device is provided with at least two roller clamping assemblies. Each roller clamping assembly includes a first roller and a second roller. The composite electrode sheet can pass through the gap between the first roller and the second roller, and the first roller and the second roller can cooperate to limit the composite electrode sheet, such that the composite electrode sheet located between two adjacent roller clamping assemblies along the conveyance direction of the composite electrode sheet is less likely to jitter. This helps improve the accuracy of detection by the detection mechanism. In addition, since outer peripheral surfaces of the first roller and the second roller are both arc surfaces, the first roller and the second roller are less likely to cause damage to the composite electrode sheet when limiting the composite electrode sheet. In this way, a risk of lithium precipitation in the electrode assembly manufactured with the composite electrode sheet that passes the detection is relatively low, which helps prolong a lifespan of the electrode assembly.

As an optional technical solution of the embodiments of this application, at least one of the first roller and the second roller is a floating roller capable of moving along a thickness direction of the composite electrode sheet.

In the above technical solution, at least one of the first roller and the second roller is set as a floating roller capable of moving along the thickness direction of the composite electrode sheet, to a certain extent, an excessively large external force cannot be applied to the composite electrode sheet, reducing the risk of damage to the composite electrode sheet.

As an optional technical solution of the embodiments of this application, one of the first roller and the second roller is the floating roller.

In the above technical solution, one of the first roller and the second roller is a floating roller, and the other of the first roller and the second roller is a fixed roller, so that an excessively large external force cannot be applied to the composite electrode sheet to a certain extent, reducing the risk of damage to the composite electrode sheet; and a relatively good limiting effect on the composite electrode sheet is provided, reducing the risk of jittering of the composite electrode sheet located in the detection area. This helps improve the accuracy of detection by the detection mechanism.

As an optional technical solution of the embodiments of this application, the first roller and the detection mechanism are provided on a same side of the composite electrode sheet, and the second roller is the floating roller.

In the above technical solution, when the second roller is a floating roller, the first roller is a fixed roller. The first roller and the detection mechanism are provided on the same side of the composite electrode sheet. The first roller can ensure a stable distance between the detection mechanism and the composite electrode sheet to a certain extent, thereby improving the accuracy of detection by the detection mechanism.

As an optional technical solution of the embodiments of this application, the roller clamping assembly includes an elastic member, the elastic member is connected to the second roller, and the elastic member is configured to drive the second roller to move in a direction approaching the first roller, to enable the second roller to cooperate with the first roller to limit the composite electrode sheet.

In the above technical solution, the elastic member is connected to the second roller, and the elastic member biases the second roller towards the first roller, such that the second roller and the first roller cooperate to limit the composite electrode sheet. In addition, the elastic member can deform under the action of an external force, thereby allowing the second roller to move in a direction leaving the first roller. That is, the elastic member allows the second roller to float along the thickness direction of the composite electrode sheet.

As an optional technical solution of the embodiments of this application, both the first roller and the second roller are driven rollers capable of rotating during conveyance of the composite electrode sheet.

In the above technical solution, both the first roller and the second roller are driven rollers. When the conveying mechanism conveys the composite electrode sheet, the first roller and the second roller can rotate under the drive of the composite electrode sheet. A linear speed of any point on the outer peripheral surface of the first roller, a linear speed of any point on the outer peripheral surface of the second roller, and the conveyance speed of the composite electrode sheet are the same. This facilitates stable and smooth conveyance of the composite electrode sheet, reducing the risk of jittering of the composite electrode sheet, and helps improve the accuracy of detection by the detection mechanism.

As an optional technical solution of the embodiments of this application, a roller diameter of the first roller is D₁, satisfying: 25 mm ≤ D₁ ≤ 35 mm; and/or a roller diameter of the second roller is D₂, satisfying: 25 mm ≤ D₂ ≤ 35 mm.

In the above technical solution, when D₁ ≥ 25 mm, the first roller has a relatively large roller diameter, so that the first roller has a relatively great strength, and the first roller is less likely to break under the action of the composite electrode sheet. When D₁ ≤ 35 mm, the diameter of the first roller is not excessively large. In this case, the first roller occupies less space and is less likely to block the composite electrode sheet. In addition, in a case that spacings between the first rollers of two adjacent roller clamping assemblies are the same, a relatively small diameter of the first roller means a relatively short distance from a gap through which the composite electrode sheet passes in one roller clamping assembly to a gap through which the composite electrode sheet passes in the other roller clamping assembly, providing relatively good limiting effect on the composite electrode sheet, reducing the risk of jittering of the composite electrode sheet. Therefore, when 25 mm ≤ D₁ ≤ 35 mm, the strength of the first roller and the limiting effect on the composite electrode sheet can be balanced.

When D₂ ≥ 25 mm, the second roller has a relatively large roller diameter, so that the second roller has a relatively great strength, and the second roller is less likely to break under the action of the composite electrode sheet. When D₂ ≤ 35 mm, the diameter of the second roller is not excessively large. In this case, the second roller occupies less space and is less likely to block the composite electrode sheet. In addition, in a case that spacings between the second rollers of two adjacent roller clamping assemblies are the same, a relatively small diameter of the second roller means a relatively short distance from a gap through which the composite electrode sheet passes in one roller clamping assembly to a gap through which the composite electrode sheet passes in the other roller clamping assembly, providing relatively good limiting effect on the composite electrode sheet, reducing the risk of jittering of the composite electrode sheet. Therefore, when 25 mm ≤ D₂ ≤ 35 mm, the strength of the second roller and the limiting effect on the composite electrode sheet can be balanced.

As an optional technical solution of the embodiments of this application, 28 mm ≤ D₁ ≤ 32 mm; and/or 28 mm ≤ D₂ ≤ 32 mm.

In the above technical solution, when D₁ ≥ 28 mm, the first roller has a larger roller diameter, so that the first roller has a greater strength, and the first roller is less likely to break under the action of the composite electrode sheet. When D₁ ≤ 32 mm, the diameter of the first roller is not excessively large. In this case, the first roller occupies less space and is less likely to block the composite electrode sheet. In addition, in a case that spacings between the first rollers of two adjacent roller clamping assemblies are the same, a relatively small diameter of the first roller means a relatively short distance from a gap through which the composite electrode sheet passes in one roller clamping assembly to a gap through which the composite electrode sheet passes in the other roller clamping assembly, providing better limiting effect on the composite electrode sheet, reducing the risk of jittering of the composite electrode sheet. Therefore, when 28 mm ≤ D₁ ≤ 32 mm, the strength of the first roller and the limiting effect on the composite electrode sheet can be balanced.

When D₂ ≥ 28 mm, the second roller has a larger roller diameter, so that the second roller has a greater strength, and the second roller is less likely to break under the action of the composite electrode sheet. When D₂ ≤ 32 mm, the diameter of the second roller is not excessively large. In this case, the second roller occupies less space and is less likely to block the composite electrode sheet. In addition, in a case that spacings between the second rollers of two adjacent roller clamping assemblies are the same, a relatively small diameter of the second roller means a relatively short distance from a gap through which the composite electrode sheet passes in one roller clamping assembly to a gap through which the composite electrode sheet passes in the other roller clamping assembly, providing relatively good limiting effect on the composite electrode sheet, reducing the risk of jittering of the composite electrode sheet. Therefore, when 28 mm ≤ D₂ ≤ 32 mm, the strength of the second roller and the limiting effect on the composite electrode sheet can be balanced.

As an optional technical solution of the embodiments of this application, the detection mechanism includes an image acquisition assembly and a controller, where the image acquisition assembly is configured to acquire image information of the composite electrode sheet; and the controller is in communication connection with the image acquisition assembly, where the controller is configured to acquire the first overhang amount based on the image information.

In the above technical solution, the image acquisition assembly is provided to acquire the image information of the composite electrode sheet, so that the first overhang amount can be obtained by analyzing the image information through the controller, which is simple and convenient. In addition, the entire detection process does not require contact with the composite electrode sheet, which can reduce the risk of damage to the composite electrode sheet.

As an optional technical solution of the embodiments of this application, along the conveyance direction of the composite electrode sheet, a length of an acquisition area for the image acquisition assembly to acquire the image information of the composite electrode sheet is L₁, and a spacing between first rollers of two adjacent roller clamping assemblies is L₂, satisfying: 2 mm ≤ L₂ - L₁ ≤ 5 mm.

In the above technical solution, when L₂ - L₁ ≥ 2 mm, a distance between the first roller and the acquisition area may be set to be relatively large, thereby reducing a risk that the first roller interferes with the image acquisition assembly in acquiring image information. When L₂ - L₁ ≤ 5 mm, the distance between the first roller and the acquisition area is not excessively large, such that the roller clamping assembly provides a relatively good limiting effect on the composite electrode sheet, reducing the risk of jittering of the composite electrode sheet, helping improve the accuracy of detection by the detection mechanism.

As an optional technical solution of the embodiments of this application, the image acquisition assembly includes a plurality of acquisition units, the plurality of acquisition units are in communication connection with the controller, and the plurality of acquisition units are configured to acquire image information of four corner areas of the positive electrode sheet.

In the above technical solution, the image information of the four corner areas of the positive electrode sheet is acquired through the plurality of acquisition units. Each acquisition unit only captures a relatively small area, to reduce image distortion caused by perspective distortion. Based on the acquired image information of the four corner areas, the first overhang amount by which the negative electrode sheet extends beyond the positive electrode sheet along the width direction of the composite electrode sheet can be obtained, improving the detection accuracy.

As an optional technical solution of the embodiments of this application, the conveyance direction of the composite electrode sheet is parallel to a horizontal direction.

In the above technical solution, conveying the composite electrode sheet in the horizontal direction can reduce an external force on the composite electrode sheet, to stably and smoothly convey the composite electrode sheet. This reduces the risk of jittering of the composite electrode sheet, and helps improve the accuracy of detection by the detection mechanism.

As an optional technical solution of the embodiments of this application, the composite electrode sheet includes a plurality of positive electrode sheets, and along the conveyance direction of the composite electrode sheet, the plurality of positive electrode sheets are alternately provided on two sides of the negative electrode sheet; and detection mechanisms are provided on two sides of the composite electrode sheet, and the detection mechanism and the limiting mechanism is in one-to-one correspondence.

In the above technical solution, the detection mechanisms are respectively provided on the two sides of the composite electrode sheet to respectively detect the positive electrode sheets on the two sides of the negative electrode sheet, so that in-line dimension inspection of the composite electrode sheet can be achieved. During conveyance of the composite electrode sheet, the detection mechanism can sequentially detect each positive electrode sheet, achieving complete detection of the plurality of positive electrode sheets.

As an optional technical solution of the embodiments of this application, the detection mechanism is further configured to detect a second overhang amount by which the separator extends beyond the negative electrode sheet along the width direction of the composite electrode sheet.

In the above technical solution, the second overhang amount by which the separator extends beyond the negative electrode sheet along the width direction of the composite electrode sheet is detected, to detect the effect of the separator in separating the positive electrode sheet and the negative electrode sheet. This reduces a risk of short circuit due to contact between the positive electrode sheet and the negative electrode sheet, which helps improve the reliability of a battery cell.

As an optional technical solution of the embodiments of this application, the detection device further includes a light source, the light source is provided on at least one side of the composite electrode sheet, and the light source is correspondingly provided for the detection mechanism.

In the above technical solution, the light source may be provided on a side of the composite electrode sheet facing the detection mechanism to supplement light for the detection mechanism and improve the accuracy of detection by the detection mechanism. Alternatively, the light source may be provided on a side of the composite electrode sheet facing away from the detection mechanism to penetrate the separator to detect the negative electrode sheet, thereby improving the accuracy of detection by the detection mechanism.

As an optional technical solution of the embodiments of this application, light sources are provided on the two sides of the composite electrode sheet.

In the above technical solution, the light sources on the two sides of the composite electrode sheet can supplement light for the detection mechanism and enables the detection mechanism to penetrate the separator to detect the negative electrode sheet, helping improve the accuracy of detection by the detection mechanism.

According to a second aspect, embodiments of this application further provide a battery production system, where the battery production system includes a provision device, the above detection device, and a manufacturing device; the provision device is configured to provide a composite electrode sheet; the detection device is configured to detect a first overhang amount of the composite electrode sheet; and the manufacturing device is configured to wind or stack the composite electrode sheet satisfying a requirement for first overhang amount into an electrode assembly.

### BRIEF DESCRIPTION OF DRAWINGS

To more clearly illustrate the technical solutions of the embodiments of this application, the accompanying drawings for the embodiments are briefly introduced below. It should be understood that the following drawings only illustrate some embodiments of this application and should not be regarded as limitations to the scope. For those of ordinary skill in the art, other related drawings can also be obtained based on these drawings without creative effort.
FIG. 1 is a schematic block diagram of a detection device provided in some embodiments of this application;
FIG. 2 is a schematic structural diagram of a detection device provided in some embodiments of this application;
FIG. 3 is a schematic structural diagram of a detection device provided in other embodiments of this application;
FIG. 4 is a schematic block diagram of a detection mechanism provided in some embodiments of this application;
FIG. 5 is a schematic diagram of a plurality of acquisition units acquiring image information of four corner areas of a positive electrode sheet provided in some embodiments of this application;
FIG. 6 is a schematic structural diagram of a detection device provided in still other embodiments of this application;
FIG. 7 is a schematic structural diagram of a detection device provided in yet other embodiments of this application; and
FIG. 8 is a schematic block diagram of a battery production system provided in some embodiments of this application.

Reference signs: 10-detection device; 100-conveying mechanism; 110-unwinding mechanism; 120-winding mechanism; 200-limiting mechanism; 210-roller clamping assembly; 211-first roller; 212-second roller; 213-elastic member; 300-detection mechanism; 310-image acquisition assembly; 320-controller; 400-detection area; 500-light source; 20-composite electrode sheet; 21-positive electrode sheet; 22-negative electrode sheet; 23-separator; 30-battery production system; 31-provision device; and 32-manufacturing device.

### DESCRIPTION OF EMBODIMENTS

To make the objectives, technical solutions, and advantages of the embodiments of this application clearer, the technical solutions in the embodiments of this application are clearly described below with reference to the accompanying drawings in the embodiments of this application. It is clear that the described embodiments are some but not all embodiments of this application. Based on the embodiments in this application, all other embodiments obtained by those of ordinary skill in the art without creative effort fall within the protection scope of this application.

Unless otherwise defined, all technical and scientific terms used in this application have the same meanings as commonly understood by those of ordinary skill in the art to which this application pertains. In this application, the terms used in the specification of this application are only for the purpose of describing specific embodiments and are not intended to limit this application. The terms "include" and "comprise" and any variations thereof in the specification and claims of this application and the above description of the drawings are intended to cover non-exclusive inclusion. The terms "first", "second" and the like in the specification and claims of this application or the above drawings are used to distinguish different objects, and are not used to describe a specific order or primary-secondary relationship.

The term "embodiment" in this application means that a particular feature, structure, or characteristic described with reference to the embodiment can be included in at least one embodiment of this application. The appearance of this phrase in various places in the specification does not necessarily refer to a same embodiment, nor is it an independent or alternative embodiment that is mutually exclusive with other embodiments.

In the description of this application, it should be noted that, unless otherwise clearly specified and limited, the terms "mount", "connect", "couple", and "attach" should be understood in a broad sense, for example, they may refer to a fixed connection, a detachable connection, or an integral connection; or a direct connection or an indirect connection through an intermediary; or communication between two elements. For those of ordinary skill in the art, the specific meanings of the above terms in this application can be understood based on specific situations.

The term "and/or" in this application is merely an association describing associated objects, indicating that three relationships may exist, for example, A and/or B may indicate: A exists alone, A and B exist simultaneously, B exists alone. In addition, the character "/" in this application generally indicates that the associated objects are in an "or" relationship.

In the embodiments of this application, the same reference signs indicate the same components, and for brevity, detailed descriptions of the same components in different embodiments are omitted. It should be understood that the thicknesses, lengths, widths, and other dimensions of various components in the embodiments of this application shown in the drawings, as well as the overall thicknesses, lengths, widths, and other dimensions of the integrated device, are merely illustrative and do not constitute any limitation on this application.

"Plurality" in this application refers to two or more (including two).

In this application, the battery cell may include a lithium-ion secondary battery, a lithium-ion primary battery, a lithium-sulfur battery, a sodium-lithium ion battery, a sodium-ion battery, a magnesium-ion battery, or the like, and the embodiments of this application are not limited thereto. The battery cell may be cylindrical, flat, rectangular, or the like, and the embodiments of this application are not limited thereto. Battery cells are generally classified into three types based on packaging methods: cylindrical battery cell, prismatic battery cell, and pouch battery cell, and the embodiments of this application are not limited thereto.

The battery mentioned in the embodiments of this application refers to a single physical module that includes one or more battery cells to provide a higher voltage and capacity. For example, the battery mentioned in this application may include a battery module, a battery pack, or the like. A battery generally includes a box for packaging one or more battery cells. With the box, the influence of liquids or other foreign objects on the charge or discharge of the battery cells can be avoided to a certain extent.

A battery cell includes an electrode assembly and an electrolyte, and the electrode assembly is formed by a positive electrode sheet, a negative electrode sheet, and a separator. The battery cell mainly operates based on movement of metal ions between the positive electrode sheet and the negative electrode sheet. The positive electrode sheet includes a positive electrode current collector and a positive electrode active material layer, the positive electrode active material layer is applied to a surface of the positive electrode current collector, the positive electrode current collector not coated with the positive electrode active material layer extends beyond the positive electrode current collector coated with the positive electrode active material layer, and the positive electrode current collector not coated with the positive electrode active material layer serves as a positive electrode tab. A lithium-ion battery is used as an example. A material of the positive electrode current collector may be aluminum, and the positive electrode active material may be lithium cobalt oxide, lithium iron phosphate, ternary lithium, lithium manganate, or the like. The negative electrode sheet includes a negative electrode current collector and a negative electrode active material layer, the negative electrode active material layer is applied to a surface of the negative electrode current collector, the negative electrode current collector not coated with the negative electrode active material layer extends beyond the negative electrode current collector coated with the negative electrode active material layer, and the negative electrode current collector not coated with the negative electrode active material layer serves as a negative electrode tab. A material of the negative electrode current collector may be copper, and the negative electrode active material may be carbon, silicon, or the like. To ensure that large current passes without fusing, a plurality of positive electrode tabs are stacked, and a plurality of negative electrode tabs are stacked. A material of the separator may be PP (polypropylene, polypropylene), PE (polyethylene, polyethylene), or the like. In addition, the electrode assembly may be a wound structure or a stacked structure, and the embodiments of this application are not limited thereto.

Currently, market trends show that batteries are finding ever broader applications. Batteries are not only applied to energy storage power systems such as hydraulic, thermal, wind, and solar power stations, but also widely applied to electric bicycles, electric motorcycles, electric vehicles and other electric vehicles, as well as military equipment, aerospace, and other fields. With the continuous expansion of battery application fields, the market demand is also increasing.

The development of battery technologies requires simultaneous consideration of multiple design factors, such as performance parameters including energy density, discharge capacity, and charge-discharge rate. In addition, a battery lifespan needs to be considered. However, lifespans of current batteries are relatively short.

A battery includes an electrode assembly, and the electrode assembly is a component in the battery where electrochemical reactions occur. The electrode assembly is mainly formed by winding or stacking a positive electrode sheet, a separator, and a negative electrode sheet. When manufacturing the electrode assembly, it is necessary to ensure that an overhang amount by which the negative electrode sheet along its width direction extends beyond the positive electrode sheet is within a preset range; otherwise, the manufactured electrode assembly is prone to lithium precipitation, resulting in a short lifespan of the battery.

In the detection device in the prior art, when detecting a composite electrode sheet, it is necessary to clamp the moving composite electrode sheet with a clamping member. The contact between the clamping member and the moving composite electrode sheet not only easily causes the composite electrode sheet to jitter, leading to inaccurate detection results, but also easily causes damage to the composite electrode sheet, thereby affecting the performance of the manufactured battery.

In view of this, the embodiments of this application provide a detection device for detecting a composite electrode sheet. The composite electrode sheet includes a negative electrode sheet, a separator, and a positive electrode sheet, and the separator separates the negative electrode sheet and the positive electrode sheet from each other. The detection device includes a conveying mechanism, a limiting mechanism, and a detection mechanism. The conveying mechanism is configured to convey the composite electrode sheet. The limiting mechanism includes at least two roller clamping assemblies, the roller clamping assembly includes a first roller and a second roller, a gap for the composite electrode sheet to pass through is formed between the first roller and the second roller, and the first roller and the second roller are configured to cooperate to limit the composite electrode sheet. A detection area is formed between two adjacent roller clamping assemblies along a conveyance direction of the composite electrode sheet. The detection mechanism is configured to detect a first overhang amount by which the negative electrode sheet located in the detection area extends beyond the positive electrode sheet along a width direction of the composite electrode sheet.

The detection device is provided with at least two roller clamping assemblies. Each roller clamping assembly includes a first roller and a second roller. The composite electrode sheet can pass through the gap between the first roller and the second roller, and the first roller and the second roller can cooperate to limit the composite electrode sheet, such that the composite electrode sheet located between two adjacent roller clamping assemblies along the conveyance direction of the composite electrode sheet is less likely to jitter. This helps improve the accuracy of detection by the detection mechanism. In addition, since outer peripheral surfaces of the first roller and the second roller are both arc surfaces, the first roller and the second roller are less likely to cause damage to the composite electrode sheet when limiting the composite electrode sheet. In this way, a risk of lithium precipitation in the electrode assembly manufactured with the composite electrode sheet that passes the detection is relatively low, which helps prolong a lifespan of the electrode assembly.

The technical solution described in the embodiments of this application is suitable for detecting the first overhang amount by which the negative electrode sheet of the composite electrode sheet extends beyond the positive electrode sheet along the width direction of the composite electrode sheet, and the detection accuracy is high. A risk of lithium precipitation in the electrode assembly manufactured with the composite electrode sheet that passes the detection is relatively low, which helps prolong a lifespan of the electrode assembly.

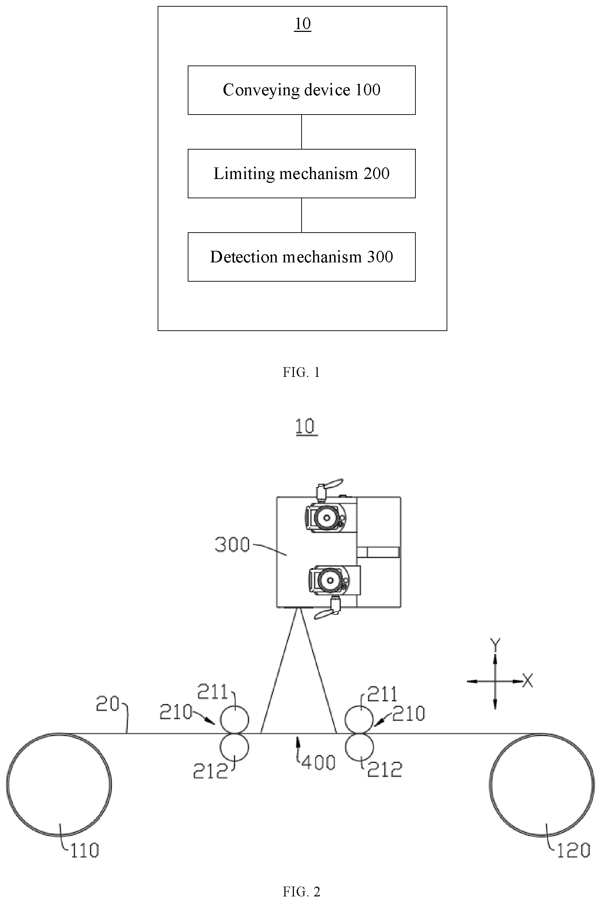

Refer to FIG. 1 and FIG. 2. FIG. 1 is a schematic block diagram of a detection device 10 provided in some embodiments of this application. FIG. 2 is a schematic structural diagram of a detection device 10 provided in some embodiments of this application. Embodiments of this application provide a detection device 10, configured to detect a composite electrode sheet 20. The composite electrode sheet 20 includes a negative electrode sheet 22, a separator 23, and a positive electrode sheet 21. The separator 23 separates the negative electrode sheet 22 and the positive electrode sheet 21 from each other. The detection device 10 includes a conveying mechanism 100, a limiting mechanism 200, and a detection mechanism 300, and the conveying mechanism 100 is configured to convey the composite electrode sheet 20. The limiting mechanism 200 includes at least two roller clamping assemblies 210, the roller clamping assembly 210 includes a first roller 211 and a second roller 212, a gap for the composite electrode sheet 20 to pass through is formed between the first roller 211 and the second roller 212, and the first roller 211 and the second roller 212 are configured to cooperate to limit the composite electrode sheet 20. A detection area 400 is formed between two adjacent roller clamping assemblies 210 along the conveyance direction of the composite electrode sheet 20. The detection mechanism 300 is configured to detect a first overhang amount by which the negative electrode sheet 22 located in the detection area 400 extends beyond the positive electrode sheet 21 along the width direction of the composite electrode sheet 20.

The conveying mechanism 100 is a mechanism for conveying the composite electrode sheet 20. In some embodiments, the conveying mechanism 100 includes an unwinding mechanism 110 and a winding mechanism 120, where the unwinding mechanism 110 is configured to unwind the composite electrode sheet 20, and the winding mechanism 120 is configured to wind the composite electrode sheet 20, to achieve conveyance of the composite electrode sheet 20. In other embodiments, the conveying mechanism 100 includes a plurality of guide rollers, where the composite electrode sheet 20 sequentially passes the plurality of guide rollers, and the composite electrode sheet 20 moves under the guidance of the plurality of guide rollers.

The limiting mechanism 200 may include two roller clamping assemblies 210, three roller clamping assemblies 210, four roller clamping assemblies 210, or more than four roller clamping assemblies 210. At least two roller clamping assemblies 210 are arranged along the conveyance direction of the composite electrode sheet 20. Refer to FIG. 2. The conveyance direction of the composite electrode sheet 20 may be an X direction shown in the figure.

Each roller clamping assembly 210 includes a first roller 211 and a second roller 212, the first roller 211 and the second roller 212 are spaced apart, and the composite electrode sheet 20 can pass through the gap between the first roller 211 and the second roller 212. The first roller 211 and the second roller 212 of two adjacent roller clamping assemblies 210 can cooperate to limit the composite electrode sheet 20, reducing the risk of jittering of the composite electrode sheet 20.

A detection area 400 is formed between two adjacent roller clamping assemblies 210. The detection mechanism 300 is configured to detect the composite electrode sheet 20 located in the detection area 400 to determine the first overhang amount by which the negative electrode sheet 22 extends beyond the positive electrode sheet 21 along the width direction of the composite electrode sheet 20, which is commonly known as overhang detection. Overhang refers to a protruding portion of the negative electrode sheet 22 beyond the positive electrode sheet 21. An overhang design reduces the risk of lithium precipitation.

The detection device 10 is provided with at least two roller clamping assemblies 210. Each roller clamping assembly 210 includes a first roller 211 and a second roller 212. The composite electrode sheet 20 can pass through the gap between the first roller 211 and the second roller 212, and the first roller 211 and the second roller 212 can cooperate to limit the composite electrode sheet 20, such that the composite electrode sheet 20 located between two adjacent roller clamping assemblies 210 along the conveyance direction of the composite electrode sheet 20 is less likely to jitter, which helps improve the accuracy of detection by the detection mechanism 300. In addition, since outer peripheral surfaces of the first roller 211 and the second roller 212 are both arc surfaces, the first roller 211 and the second roller 212 are less likely to cause damage to the composite electrode sheet 20 when limiting the composite electrode sheet 20. In this way, the risk of lithium precipitation in the electrode assembly manufactured with the composite electrode sheet 20 that passes the detection is relatively low, which helps prolong a lifespan of the electrode assembly.

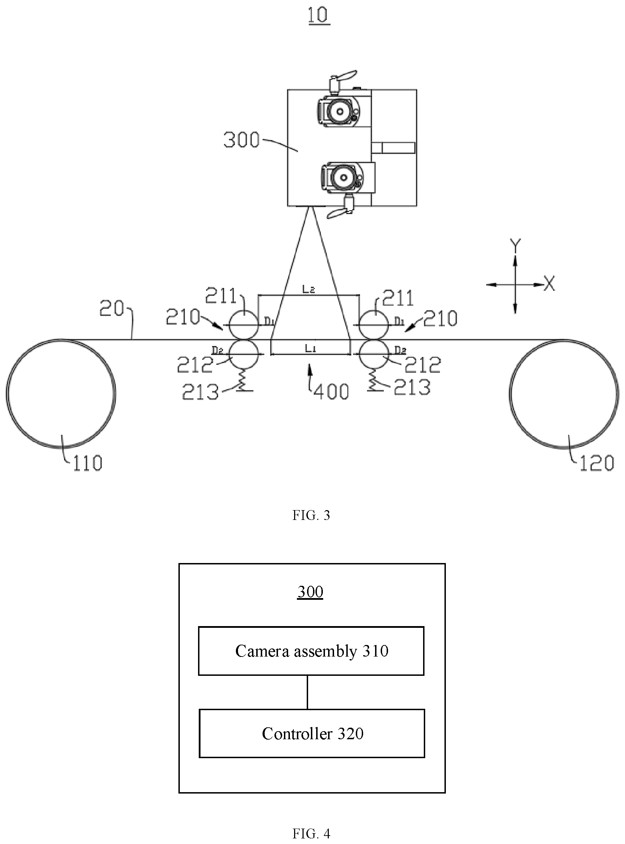

Refer to FIG. 3. FIG. 3 is a schematic structural diagram of a detection device 10 provided in other embodiments of this application. In other embodiments, at least one of the first roller 211 and the second roller 212 is a floating roller capable of moving along a thickness direction of the composite electrode sheet 20.

Only one of the first roller 211 and the second roller 212 may be a floating roller, for example, the first roller 211 is a floating roller and the second roller 212 is not a floating roller. Alternatively, the second roller 212 is a floating roller and the first roller 211 is not a floating roller. The first roller 211 and the second roller 212 may also both be floating rollers.

The floating roller may float along the thickness direction of the composite electrode sheet 20. For example, when the composite electrode sheet 20 is locally thickened, the floating roller may move along the thickness direction of the composite electrode sheet 20 to increase a gap between the first roller 211 and the second roller 212, avoiding applying excessive external force to the composite electrode sheet 20 to a certain extent and reducing the risk of damage to the composite electrode sheet 20. Alternatively, when the composite electrode sheet 20 is locally thinned, the floating roller may move along the thickness direction of the composite electrode sheet 20 to reduce the gap between the first roller 211 and the second roller 212, maintaining the limiting effect on the composite electrode sheet 20.

At least one of the first roller 211 and the second roller 212 is set as a floating roller capable of moving along the thickness direction of the composite electrode sheet 20, to a certain extent, an excessively large external force cannot be applied to the composite electrode sheet 20, reducing the risk of damage to the composite electrode sheet 20.

In some embodiments, one of the first roller 211 and the second roller 212 is a floating roller.

One of the first roller 211 and the second roller 212 is a floating roller, and the other of the first roller 211 and the second roller 212 may be a fixed roller. When the first roller 211 is a floating roller, the second roller 212 is a fixed roller. When the first roller 211 is a fixed roller, the second roller 212 is a floating roller.

It should be noted that a "fixed roller" refers to a roller rotatably connected to a frame, where the roller capable of rotating relative to the frame cannot move or swing relative to the frame.

One of the first roller 211 and the second roller 212 is a floating roller, and the other of the first roller 211 and the second roller 212 is a fixed roller, so that an excessively large external force cannot be applied to the composite electrode sheet 20 to a certain extent, reducing the risk of damage to the composite electrode sheet 20; and a relatively good limiting effect on the composite electrode sheet 20 is provided, reducing the risk of jittering of the composite electrode sheet 20 located in the detection area 400. This helps improve the accuracy of detection by the detection mechanism 300.

Refer to FIG. 3. In some embodiments, the first roller 211 and the detection mechanism 300 are provided on a same side of the composite electrode sheet 20, and the second roller 212 is a floating roller.

When the second roller 212 is a floating roller, the first roller 211 may be a fixed roller. The first roller 211 and the detection mechanism 300 are provided on the same side of the composite electrode sheet 20, and the second roller 212 and the detection mechanism 300 are respectively provided on both sides of the composite electrode sheet 20.

When the second roller 212 is a floating roller, the first roller 211 is a fixed roller. The first roller 211 and the detection mechanism 300 are provided on the same side of the composite electrode sheet 20. The first roller 211 can ensure a stable distance between the detection mechanism 300 and the composite electrode sheet 20 to a certain extent, thereby improving the accuracy of detection by the detection mechanism 300.

Refer to FIG. 3. In some embodiments, the roller clamping assembly 210 includes an elastic member 213. The elastic member 213 is connected to the second roller 212, and the elastic member 213 is configured to drive the second roller 212 to move in a direction approaching the first roller 211, so that the second roller 212 cooperates with the first roller 211 to limit the composite electrode sheet 20.

The elastic member 213 is an element that performs various functions based on the elastic properties of the material. The elastic member 213 undergoes elastic deformation under load, and restores its original geometric dimension and shape after the load is removed.

The elastic member 213 may be a spring, a leaf spring, elastic rubber, or the like.

Optionally, the elastic member 213 acts between the frame and the second roller 212 to achieve floating of the second roller 212.

The elastic member 213 is connected to the second roller 212, and the elastic member 213 biases the second roller 212 towards the first roller 211, such that the second roller 212 and the first roller 211 cooperate to limit the composite electrode sheet 20. In addition, the elastic member 213 can deform under the action of an external force, thereby allowing the second roller 212 to move in a direction leaving the first roller 211. That is, the elastic member 213 allows the second roller 212 to float along the thickness direction of the composite electrode sheet 20.

In some embodiments, both the first roller 211 and the second roller 212 are driven rollers that can rotate during conveyance of the composite electrode sheet 20.

Both the first roller 211 and the second roller 212 are driven rollers. No driving member is provided on the first roller 211 and the second roller 212 for their active rotation. When the conveying mechanism 100 conveys the composite electrode sheet 20, the first roller 211 and the second roller 212 can rotate under the drive of the composite electrode sheet 20.

The first roller 211 and the second roller 212 are set as driven rollers, and a linear speed of any point on the outer peripheral surface of the first roller 211, a linear speed of any point on the outer peripheral surface of the second roller 212, and the conveyance speed of the composite electrode sheet 20 are the same. This facilitates stable and smooth conveyance of the composite electrode sheet 20, reducing the risk of jittering of the composite electrode sheet 20, and helps improve the accuracy of detection by the detection mechanism 300.

Refer to FIG. 3. In some embodiments, a roller diameter of the first roller 211 is D₁, satisfying: 25 mm ≤ D₁ ≤ 35 mm.

The roller diameter of the first roller 211 refers to a diameter of the first roller 211. The roller diameter of the first roller 211 may be: D₁ = 25 mm, 26 mm, 27 mm, 28 mm, 29 mm, 30 mm, 31 mm, 32 mm, 33 mm, 34 mm, 35 mm, or the like.

When D₁ ≥ 25 mm, the first roller 211 has a relatively large roller diameter, so that the first roller 211 has a relatively great strength, and the first roller 211 is less likely to break under the action of the composite electrode sheet 20. When D₁ ≤ 35 mm, the diameter of the first roller 211 is not excessively large. In this case, the first roller 211 occupies less space and is less likely to block the composite electrode sheet 20. In addition, in a case that spacings between the first rollers 211 of two adjacent roller clamping assemblies 210 are the same, a relatively small diameter of the first roller 211 means a relatively short distance from a gap through which the composite electrode sheet 20 passes in one roller clamping assembly 210 to a gap through which the composite electrode sheet 20 passes in the other roller clamping assembly 210, providing relatively good limiting effect on the composite electrode sheet 20, reducing the risk of jittering of the composite electrode sheet 20. Therefore, when 25 mm ≤ D₁ ≤ 35 mm, the strength of the first roller 211 and the limiting effect on the composite electrode sheet 20 can be balanced.

Optionally, 28 mm ≤ D₁ ≤ 32 mm.

The roller diameter of the first roller 211 may be: D₁ = 28 mm, 28.5 mm, 29 mm, 29.5 mm, 30 mm, 30.5 mm, 31 mm, 31.5 mm, 32 mm, or the like.

When D₁ ≥ 28 mm, the first roller 211 has a larger roller diameter, so that the first roller 211 has a greater strength, and the first roller 211 is less likely to break under the action of the composite electrode sheet 20. When D₁ ≤ 32 mm, the diameter of the first roller 211 is not excessively large. In this case, the first roller 211 occupies less space and is less likely to block the composite electrode sheet 20. In addition, in a case that spacings between the first rollers 211 of two adjacent roller clamping assemblies 210 are the same, a relatively small diameter of the first roller 211 means a relatively short distance from a gap through which the composite electrode sheet 20 passes in one roller clamping assembly 210 to a gap through which the composite electrode sheet 20 passes in the other roller clamping assembly 210, providing better limiting effect on the composite electrode sheet 20, reducing the risk of jittering of the composite electrode sheet 20. Therefore, when 28 mm ≤ D₁ ≤ 32 mm, the strength of the first roller 211 and the limiting effect on the composite electrode sheet 20 can be balanced.

Refer to FIG. 3. In some embodiments, a roller diameter of the second roller 212 is D₂, satisfying: 25 mm ≤ D₂ ≤ 35 mm.

The roller diameter of the second roller 212 refers to a diameter of the second roller 212. The roller diameter of the second roller 212 may be: D₂ = 25 mm, 26 mm, 27 mm, 28 mm, 29 mm, 30 mm, 31 mm, 32 mm, 33 mm, 34 mm, 35 mm, or the like.

When D₂ ≥ 25 mm, the second roller 212 has a relatively large roller diameter, so that the second roller 212 has a relatively great strength, and the second roller 212 is less likely to break under the action of the composite electrode sheet 20. When D₂ ≤ 35 mm, the diameter of the second roller 212 is not excessively large. In this case, the second roller 212 occupies less space and is less likely to block the composite electrode sheet 20. In addition, in a case that spacings between the second rollers 212 of two adjacent roller clamping assemblies 210 are the same, a relatively small diameter of the second roller 212 means a relatively short distance from a gap through which the composite electrode sheet 20 passes in one roller clamping assembly 210 to a gap through which the composite electrode sheet 20 passes in the other roller clamping assembly 210, providing relatively good limiting effect on the composite electrode sheet 20, reducing the risk of jittering of the composite electrode sheet 20. Therefore, when 25 mm ≤ D₂ ≤ 35 mm, the strength of the second roller 212 and the limiting effect on the composite electrode sheet 20 can be balanced.

Optionally, 28 mm ≤ D₂ ≤ 32 mm.

The roller diameter of the second roller 212 may be: D₂ = 28 mm, 28.5 mm, 29 mm, 29.5 mm, 30 mm, 30.5 mm, 31 mm, 31.5 mm, 32 mm, or the like.

When D₂ ≥ 28 mm, the second roller 212 has a larger roller diameter, so that the second roller 212 has a greater strength, and the second roller 212 is less likely to break under the action of the composite electrode sheet 20. When D₂ ≤ 32 mm, the diameter of the second roller 212 is not excessively large. In this case, the second roller 212 occupies less space and is less likely to block the composite electrode sheet 20. In addition, in a case that spacings between the second rollers 212 of two adjacent roller clamping assemblies 210 are the same, a relatively small diameter of the second roller 212 means a relatively short distance from a gap through which the composite electrode sheet 20 passes in one roller clamping assembly 210 to a gap through which the composite electrode sheet 20 passes in the other roller clamping assembly 210, providing relatively good limiting effect on the composite electrode sheet 20, reducing the risk of jittering of the composite electrode sheet 20. Therefore, when 28 mm ≤ D₂ ≤ 32 mm, the strength of the second roller 212 and the limiting effect on the composite electrode sheet 20 can be balanced.

Refer to FIG. 3 and FIG. 4. FIG. 4 is a schematic block diagram of a detection mechanism 300 provided in some embodiments of this application. In some embodiments, the detection mechanism 300 includes an image acquisition assembly 310 and a controller 320, where the image acquisition assembly 310 is configured to acquire image information of the composite electrode sheet 20. The controller 320 is in communication connection with the image acquisition assembly 310, and the controller 320 is configured to acquire a first overhang amount based on the image information.

The image acquisition assembly 310 is an assembly capable of acquiring image information of the composite electrode sheet 20. The image acquisition assembly 310 includes but is not limited to a camera, a webcam, a video camera, and the like.

The controller 320 is a component with an information processing function, for example, a CPU (central processing unit, central processing unit), PLC (Programmable Logic Controller, programmable logic controller 320), ECU (Electronic Control Unit, electronic control unit), and the like.

"The controller 320 is in communication connection with the image acquisition assembly 310" includes a case where the controller 320 is connected to the image acquisition assembly 310 by using wired connection methods with wires, network cables, and the like, and also includes a case where the controller 320 is connected to the image acquisition assembly 310 by using wireless connection methods such as bluetooth and wireless network. The controller 320 may be directly connected to the image acquisition assembly 310, or the controller 320 may be indirectly connected to the image acquisition assembly 310 through an intermediate component.

The image acquisition assembly 310 is provided to acquire the image information of the composite electrode sheet 20, so that the first overhang amount can be obtained by analyzing the image information through the controller 320, which is simple and convenient. In addition, the entire detection process does not require contact with the composite electrode sheet 20, which can reduce the risk of damage to the composite electrode sheet 20.

Refer to FIG. 3 and FIG. 4. In some embodiments, along the conveyance direction of the composite electrode sheet 20, a length of an acquisition area for the image acquisition assembly 310 to acquire the image information of the composite electrode sheet 20 is L₁, and a spacing between first rollers 211 of two adjacent roller clamping assemblies 210 is L₂, satisfying: 2 mm ≤ L₂ - L₁ ≤ 5 mm.

L₁ represents the length of the acquisition area for the image acquisition assembly 310 to acquire the image information of the composite electrode sheet 20 along the conveyance direction of the composite electrode sheet 20, that is, a length of a field of view for acquisition by the image acquisition assembly 310 on the composite electrode sheet 20 along the conveyance direction of the composite electrode sheet 20.

L₂ represents the spacing between the first rollers 211 of two adjacent roller clamping assemblies 210 along the conveyance direction of the composite electrode sheet 20, that is, a minimum distance between the first rollers 211 of two adjacent roller clamping assemblies 210 along the conveyance direction of the composite electrode sheet 20.

L₂ - L₁ represents a difference between the spacing between the first rollers 211 of two adjacent roller clamping assemblies 210 along the conveyance direction of the composite electrode sheet 20 and the length of the acquisition area for the image acquisition assembly 310 to acquire the image information of the composite electrode sheet 20.

A value of the difference between the spacing between the first rollers 211 of two adjacent roller clamping assemblies 210 along the conveyance direction of the composite electrode sheet 20 and the length of the acquisition area for the image acquisition assembly 310 to acquire the image information of the composite electrode sheet 20 may be: L₂ - L₁ = 2 mm, 2.2 mm, 2.5 mm, 2.8 mm, 3 mm, 3.2 mm, 3.5 mm, 3.8 mm, 4 mm, 4.2 mm, 4.5 mm, 4.8 mm, 5 mm, or the like.

When L₂ - L₁ ≥ 2 mm, a distance between the first roller 211 and the acquisition area may be set to be relatively large, thereby reducing a risk that the first roller 211 interfere with the image acquisition assembly 310 in acquiring image information. When L₂ - L₁ ≤ 5 mm, the distance between the first roller 211 and the acquisition area is not excessively large, such that the roller clamping assembly 210 provides a relatively good limiting effect on the composite electrode sheet 20, reducing the risk of jittering of the composite electrode sheet 20, helping improve the accuracy of detection by the detection mechanism 300.

In some embodiments, the image acquisition assembly 310 includes a plurality of acquisition units. The plurality of acquisition units are in communication connection with the controller 320. The plurality of acquisition units are configured to acquire image information of four corner areas of the positive electrode sheet 21.

The acquisition unit is a component configured to acquire image information of a corner area of the positive electrode sheet 21. The acquisition unit includes but is not limited to a camera, a webcam, a video camera, or the like.

The image acquisition assembly 310 may include two acquisition units, three acquisition units, four acquisition units, or more than four acquisition units. Optionally, the image acquisition assembly 310 includes four acquisition units, the four acquisition units are configured to acquire image information of the four corner areas of the positive electrode sheet 21.

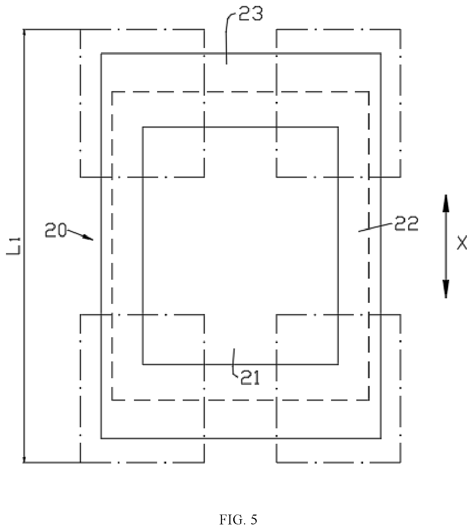

Refer to FIG. 3, FIG. 4, and FIG. 5. FIG. 5 is a schematic diagram of a plurality of acquisition units acquiring image information of four corner areas of a positive electrode sheet 21 provided in some embodiments of this application. It should be noted that the corner area of the positive electrode sheet 21 captured by a single acquisition unit not only includes a corner of the positive electrode sheet 21, but also includes images of the separator 23 and the negative electrode sheet 22 outside the positive electrode sheet 21. Refer to FIG. 5. In FIG. 5, the negative electrode sheet 22 is shown with a dashed box, and the positions of the four corner areas of the positive electrode sheet 21 captured by the four acquisition units are shown with four dot-dashed boxes. In the embodiment shown in FIG. 5, the acquisition unit can capture the corner of the positive electrode sheet 21, the corner of the negative electrode sheet 22, and the corner of the separator 23.

Refer to FIG. 5. In the embodiment shown in the figure, L₁ represents a distance, along the conveyance direction of the composite electrode sheet 20, from a side of a corner area captured by one acquisition unit away from a corner area captured by another acquisition unit to a side of the corner area captured by the another acquisition unit away from the corner area captured by the above acquisition unit.

The image information of the four corner areas of the positive electrode sheet 21 is acquired through the plurality of acquisition units. Each acquisition unit only captures a relatively small area, to reduce image distortion caused by perspective distortion. Based on the acquired image information of the four corner areas, the first overhang amount by which the negative electrode sheet 22 extends beyond the positive electrode sheet 21 along the width direction of the composite electrode sheet 20 can be obtained, improving the detection accuracy.

Refer to FIG. 3, FIG. 4, and FIG. 5. In some embodiments, the conveyance direction of the composite electrode sheet 20 is parallel to a horizontal direction.

"The conveyance direction of the composite electrode sheet 20 is parallel to a horizontal direction" means that the conveyance direction of the composite electrode sheet 20 is approximately parallel to the horizontal direction, for example, an angle between the conveyance direction of the composite electrode sheet 20 and the horizontal direction is less than or equal to 5°.

Conveying the composite electrode sheet 20 in the horizontal direction can reduce an external force on the composite electrode sheet 20, to stably and smoothly convey the composite electrode sheet 20. This reduces the risk of jittering of the composite electrode sheet 20, and helps improve the accuracy of detection by the detection mechanism 300.

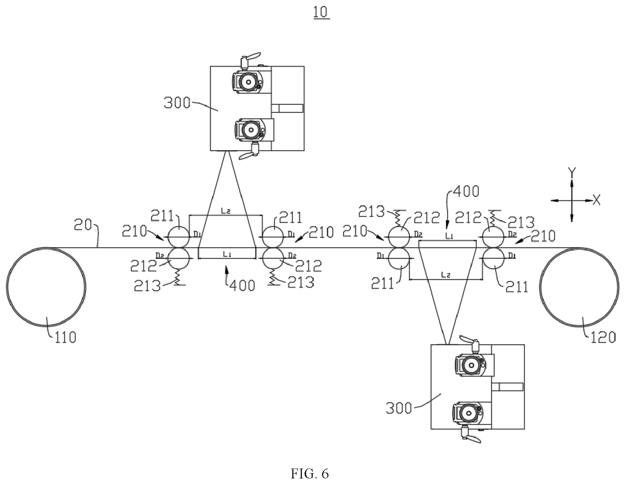

Refer to FIG. 6. FIG. 6 is a schematic structural diagram of a detection device 10 provided in still other embodiments of this application. In some embodiments, the composite electrode sheet 20 includes a plurality of positive electrode sheets 21, and along the conveyance direction of the composite electrode sheet 20, the plurality of positive electrode sheets 21 are alternately provided on two sides of the negative electrode sheet 22. Detection mechanisms 300 are provided on two sides of the composite electrode sheet 20, and the detection mechanism 300 and the limiting mechanism 200 is in one-to-one correspondence.

The detection device 10 includes at least two detection mechanisms 300, the at least two detection mechanisms 300 are provided on two sides of the composite electrode sheet 20, and each detection mechanism 300 is provided with one limiting mechanism 200. Refer to FIG. 6. In the embodiment shown in FIG. 6, the detection device 10 includes two detection mechanisms 300 and two limiting mechanisms 200, the two limiting mechanisms 200 are spaced apart along the conveyance direction of the composite electrode sheet 20, the two detection mechanisms 300 are respectively provided on two sides of the composite electrode sheet 20, and one detection mechanism 300 corresponds to one limiting mechanism 200.

The detection mechanisms 300 are respectively provided on the two sides of the composite electrode sheet 20 to respectively detect the positive electrode sheets 21 on the two sides of the negative electrode sheet 22, so that in-line dimension inspection of the composite electrode sheet 20 can be achieved. During conveyance of the composite electrode sheet 20, the detection mechanism 300 can sequentially detect each positive electrode sheet 21, achieving complete detection of the plurality of positive electrode sheets 21.

In some embodiments, the detection mechanism 300 is further configured to detect a second overhang amount by which the separator 23 extends beyond the negative electrode sheet 22 along the width direction of the composite electrode sheet 20.

The second overhang amount by which the separator 23 extends beyond the negative electrode sheet 22 along the width direction of the composite electrode sheet 20 is detected, to detect the effect of the separator 23 in separating the positive electrode sheet 21 and the negative electrode sheet 22. This reduces a risk of short circuit due to contact between the positive electrode sheet 21 and the negative electrode sheet 22, which helps improve the reliability of a battery cell.

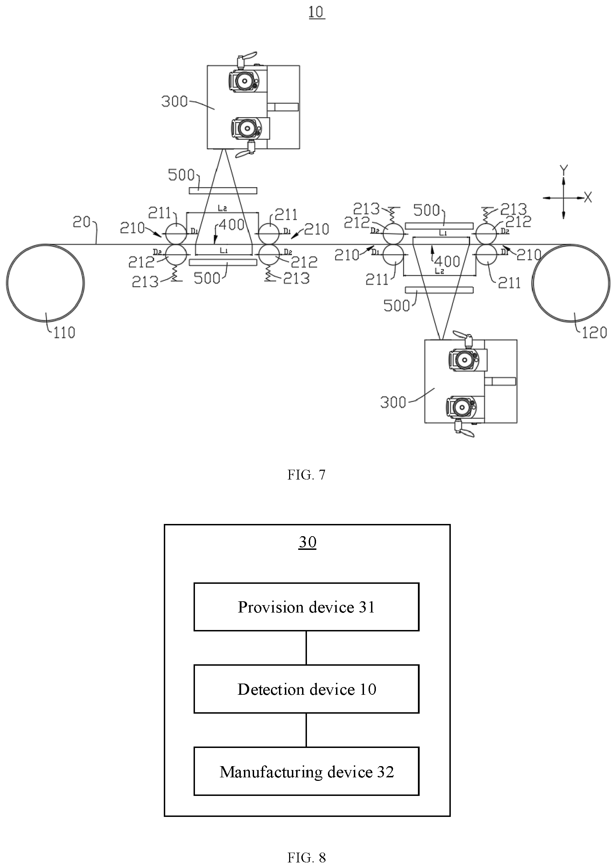

Refer to FIG. 7. FIG. 7 is a schematic structural diagram of a detection device 10 provided in yet other embodiments of this application. In yet other embodiments, the detection device 10 further includes a light source 500, the light source 500 is provided on at least one side of the composite electrode sheet 20, and the light source 500 is correspondingly provided for the detection mechanism 300.

The light source 500 may be provided only on one side of the composite electrode sheet 20, for example, the light source 500 and the detection mechanism 300 are provided on a same side of the composite electrode sheet 20. Alternatively, the light source 500 and the detection mechanism 300 are respectively provided on two sides of the composite electrode sheet 20. Certainly, light sources 500 may also be provided on two sides of the composite electrode sheet 20.

The light source 500 may be provided on a side of the composite electrode sheet 20 facing the detection mechanism 300 to supplement light for the detection mechanism 300 and improve the accuracy of detection by the detection mechanism 300. Alternatively, the light source 500 may be provided on a side of the composite electrode sheet 20 facing away from the detection mechanism 300 to penetrate the separator 23 to detect the negative electrode sheet 22, thereby improving the accuracy of detection by the detection mechanism 300.

Refer to FIG. 7. In some embodiments, light sources 500 are provided on two sides of the composite electrode sheet 20.

Colors of the light sources 500 on two sides of the composite electrode sheet 20 may be the same or different. Optionally, the light source 500 provided on a same side of the composite electrode sheet 20 as the detection mechanism 300 may be white light to supplement light for the detection mechanism 300 on the same side. The light source 500 provided on the different sides of the composite electrode sheet 20 from the detection mechanism 300 may be red light to provide background light for the detection mechanism 300 in detecting the composite electrode sheet 20, because red light with a longer wavelength and strong penetrability can penetrate the separator 23, leaving the separator 23 transparent. In this way, an edge of the negative electrode sheet 22 can be clearly shown in the image obtained by the detection mechanism 300.

The light sources 500 on the two sides of the composite electrode sheet 20 can supplement light for the detection mechanism 300 and enable the detection mechanism 300 to penetrate the separator 23 to detect the negative electrode sheet 22, helping improve the accuracy of detection by the detection mechanism 300.

Refer to FIG. 8. The FIG. 8 is a schematic block diagram of a battery production system 30 provided in some embodiments of this application. Embodiments of this application further provide a battery production system 30. The battery production system 30 includes a provision device 31, the above detection device 10, and a manufacturing device 32. The provision device 31 is configured to provide a composite electrode sheet 20. The detection device 10 is configured to detect a first overhang amount of the composite electrode sheet 20. The manufacturing device 32 is configured to wind or stack a composite electrode sheet 20 satisfying a requirement for first overhang amount into an electrode assembly. The battery production system 30 further includes a casing device. The casing device is configured to place the electrode assembly into a case to form a battery.

According to some embodiments of this application, reference is made to FIG. 1 to FIG. 7.

Embodiments of this application provide a detection device 10 for detecting a composite electrode sheet 20. The composite electrode sheet 20 includes a negative electrode sheet 22, a separator 23, and a positive electrode sheet 21. The separator 23 separates the negative electrode sheet 22 and the positive electrode sheet 21 from each other. The detection device 10 includes a conveying mechanism 100, a limiting mechanism 200, and a detection mechanism 300. The conveying mechanism 100 is configured to convey the composite electrode sheet 20. The limiting mechanism 200 includes at least two roller clamping assemblies 210. The roller clamping assembly 210 includes a first roller 211 and a second roller 212, a gap for the composite electrode sheet 20 to pass through is formed between the first roller 211 and the second roller 212, and the first roller 211 and the second roller 212 are configured to cooperate to limit the composite electrode sheet 20. A detection area 400 is formed between two adjacent roller clamping assemblies 210 along a conveyance direction of the composite electrode sheet 20. The detection mechanism 300 is configured to detect a first overhang amount by which the negative electrode sheet 22 located in the detection area 400 extends beyond the positive electrode sheet 21 along a width direction of the composite electrode sheet 20. The detection device 10 is provided with at least two roller clamping assemblies 210, each roller clamping assembly 210 includes a first roller 211 and a second roller 212, the composite electrode sheet 20 is capable of passing through the gap between the first roller 211 and the second roller 212, and the first roller 211 and the second roller 212 are capable of cooperating to limit the composite electrode sheet 20, such that the composite electrode sheet 20 located between two adjacent roller clamping assemblies 210 along the conveyance direction of the composite electrode sheet 20 is less likely to jitter, which helps improve the accuracy of detection by the detection mechanism 300. In addition, since outer peripheral surfaces of the first roller 211 and the second roller 212 are both arc surfaces, the first roller 211 and the second roller 212 are less likely to cause damage to the composite electrode sheet 20 when limiting the composite electrode sheet 20. In this way, a risk of lithium precipitation in the electrode assembly manufactured using the composite electrode sheet 20 that passes the detection is relatively low, which helps prolong a lifespan of the electrode assembly.

The first roller 211 and the detection mechanism 300 are provided on a same side of the composite electrode sheet 20, the first roller 211 is a fixed roller, and the second roller 212 is a floating roller. The first roller 211 and the detection mechanism 300 are provided on the same side of the composite electrode sheet 20, so that the first roller 211 can ensure a stable distance between the detection mechanism 300 and the composite electrode sheet 20 to a certain extent, thereby improving the accuracy of detection by the detection mechanism 300. The second roller 212 is set as a floating roller capable of moving along a thickness direction of the composite electrode sheet 20, so that an excessively large external force cannot be applied to the composite electrode sheet 20 to a certain extent, reducing the risk of damage to the composite electrode sheet 20.

The roller clamping assembly 210 includes an elastic member 213. The elastic member 213 is connected to the second roller 212. The elastic member 213 is configured to drive the second roller 212 to move in a direction approaching the first roller 211, so that the second roller 212 cooperates with the first roller 211 to limit the composite electrode sheet 20. The elastic member 213 is connected to the second roller 212, and the elastic member 213 biases the second roller 212 towards the first roller 211, such that the second roller 212 and the first roller 211 cooperate to limit the composite electrode sheet 20. In addition, the elastic member 213 can deform under the action of an external force, thereby allowing the second roller 212 to move in a direction leaving the first roller 211. That is, the elastic member 213 allows the second roller 212 to float along a thickness direction of the composite electrode sheet 20.

The above descriptions are merely preferred embodiments of this application and are not intended to limit this application. For those skilled in the art, this application may have various changes and modifications. Any modifications, equivalent substitutions, improvements, and the like made within the spirit and principles of this application shall all fall within the protection scope of this application.

## Claims

1. A detection device, configured to detect a composite electrode sheet, wherein the composite electrode sheet comprises a negative electrode sheet, a separator, and a positive electrode sheet, the separator separates the negative electrode sheet and the positive electrode sheet from each other, and the detection device comprises:
a conveying mechanism, configured to convey the composite electrode sheet;
a limiting mechanism, comprising at least two roller clamping assemblies, wherein the roller clamping assembly comprises a first roller and a second roller, a gap for the composite electrode sheet to pass through is formed between the first roller and the second roller, the first roller and the second roller are configured to cooperate to limit the composite electrode sheet, and a detection area is formed between two adjacent roller clamping assemblies along a conveyance direction of the composite electrode sheet; and
a detection mechanism, configured to detect a first overhang amount by which the negative electrode sheet located in the detection area extends beyond the positive electrode sheet along a width direction of the composite electrode sheet.

2. The detection device according to claim 1, wherein at least one of the first roller and the second roller is a floating roller capable of moving along a thickness direction of the composite electrode sheet.

3. The detection device according to claim 2, wherein one of the first roller and the second roller is the floating roller.

4. The detection device according to claim 3, wherein the first roller and the detection mechanism are provided on a same side of the composite electrode sheet, and the second roller is the floating roller.

5. The detection device according to claim 4, wherein the roller clamping assembly comprises an elastic member, the elastic member is connected to the second roller, and the elastic member is configured to drive the second roller to move in a direction approaching the first roller, to enable the second roller to cooperate with the first roller to limit the composite electrode sheet.

6. The detection device according to any one of claims 1 to 5, wherein both the first roller and the second roller are driven rollers capable of rotating during conveyance of the composite electrode sheet.

7. The detection device according to any one of claims 1 to 6, wherein a roller diameter of the first roller is D₁, satisfying: 25 mm ≤ D₁ ≤ 35 mm; and/or
a roller diameter of the second roller is D₂, satisfying: 25 mm ≤ D₂ ≤ 35 mm.

8. The detection device according to claim 7, wherein 28 mm ≤ D₁ ≤ 32 mm; and/or $28 mm \leq {D}_{2} \leq 32 mm .$

9. The detection device according to any one of claims 1 to 8, wherein the detection mechanism comprises:
an image acquisition assembly, configured to acquire image information of the composite electrode sheet; and
a controller, in communication connection with the image acquisition assembly, wherein the controller is configured to acquire the first overhang amount based on the image information.

10. The detection device according to claim 9, wherein along the conveyance direction of the composite electrode sheet, a length of an acquisition area for the image acquisition assembly to acquire the image information of the composite electrode sheet is L₁, and a spacing between first rollers of two adjacent roller clamping assemblies is L₂, satisfying: 2 mm ≤ L₂ - L₁ ≤ 5 mm.

11. The detection device according to claim 9 or 10, wherein the image acquisition assembly comprises a plurality of acquisition units, the plurality of acquisition units are in communication connection with the controller, and the plurality of acquisition units are configured to acquire image information of four corner areas of the positive electrode sheet.

12. The detection device according to any one of claims 1 to 11, wherein the conveyance direction of the composite electrode sheet is parallel to a horizontal direction.

13. The detection device according to any one of claims 1 to 12, wherein the composite electrode sheet comprises a plurality of positive electrode sheets, and along the conveyance direction of the composite electrode sheet, the plurality of positive electrode sheets are alternately provided on two sides of the negative electrode sheet; and
detection mechanisms are provided on two sides of the composite electrode sheet, and the detection mechanism and the limiting mechanism is in one-to-one correspondence.

14. The detection device according to any one of claims 1 to 13, wherein the detection mechanism is further configured to detect a second overhang amount by which the separator extends beyond the negative electrode sheet along the width direction of the composite electrode sheet.

15. The detection device according to any one of claims 1 to 14, wherein the detection device further comprises a light source, the light source is provided on at least one side of the composite electrode sheet, and the light source is correspondingly provided for the detection mechanism.

16. The detection device according to claim 15, wherein light sources are provided on the two sides of the composite electrode sheet.

17. A battery production system, comprising:
a provision device, configured to provide a composite electrode sheet;
the detection device according to any one of claims 1 to 16, configured to detect a first overhang amount of the composite electrode sheet; and
a manufacturing device, configured to wind or stack the composite electrode sheet satisfying a requirement for first overhang amount into an electrode assembly.
